# EUROPÄISCHE PATENTSCHRIFT

(11) **EP 1 618 780 B1**
(45) Veröffentlichungstag und Bekanntmachung des Hinweises auf die Patenterteilung: **17.10.2007**
(21) Anmeldenummer: 05106536.5
(22) Anmeldetag: 15.07.2005
(51) Int. Cl.: A01F 15/08

(54) **Ballenpresse**
Baller
Presse à balles

(30) Priorität: 22.07.2004 DE 102004035696
(43) Veröffentlichungstag der Anmeldung: 25.01.2006
(73) Patentinhaber: DEERE & COMPANY, Moline, Illinois 61265-8098 (US)
(72) Erfinder: Dubois, Jean-Yves, 70100 Cresancey (FR); Hel, Sébastien, Ancier 70100 (FR); Perrotin, Frédéric, 70100 Gray (FR)
(74) Vertreter: Magin, Ludwig Bernhard

(56) Entgegenhaltungen:
- EP-A- 0 223 351
- DE-A- 4 312 991
- DE-A1- 10 360 598
- DE-C1- 3 811 649
- FR-A- 2 747 007
- FR-A- 2 863 821
- US-A- 4 106 267
- US-A- 4 106 268

## Beschreibung

Die Erfindung betrifft eine Ballenpresse mit einem quaderförmigen Pressraum, in dem ein Presskolben beweglich aufgenommen wird, mit einem Zufuhrkanal und mit einer Zufuhreinrichtung zur Förderung und Verdichtung von Gut in dem Zufuhrkanal und zum Einbringen des verdichteten Ernteguts in den Pressraum und mit einer Sensoreinrichtung zur Ermittlung der Belastung wenigstens eines Bauteils der Ballenpresse.

Die DE-A1-195 43 343 und EP-A-0223351 zeigen eine landwirtschaftliche Ballenpresse zur Herstellung quaderförmiger Großballen. Diese Ballenpresse weist eine Wiegeinrichtung auf, die den fertig gebundenen Erntegutballen wiegt. Die Ballenpresse ist darüber hinaus mit einer Sensorik zur Ermittlung der absoluten und/oder relativen Belastung der Arbeitsorgane der Ballenpresse mittels Dehnmessstreifen, Drehzahlsensoren, Drucksensoren oder Temperatursensoren versehen.

Das der Erfindung zugrunde liegende Problem wird darin gesehen, dass die Erntegutzufuhr derartiger Ballenpressen häufig nicht optimal ist und/oder dass derartige Ballenpressen unregelmäßig geformte Ballen liefern.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Ballenpresse mit einem quaderförmigen Pressraum, in dem ein Presskolben beweglich aufgenommen wird, mit einem Zufuhrkanal und mit einer Zufuhreinrichtung zur Förderung und Verdichtung von Gut in dem Zufuhrkanal und zum Einbringen des verdichteten Ernteguts in den Pressraum und mit einer Sensoreinrichtung zur Ermittlung der Belastung wenigstens eines Bauteils der Ballenpresse zur Verfügung gestellt, wobei die Sensoreinrichtung derart ausgebildet ist, dass sie einen oder mehrere Werte ermittelt bzw. ermitteln kann, welche(r) den Erntegutsatz bzw. die Erntegutverteilung mit Bezug auf die Breite des Zufuhrkanals und somit auch der Ballenpresse als solcher bzw. des Pressraums repräsentiert. Auf diese Weise wird es möglich, die Gutzufuhr in die Ballenpresse beispielsweise durch eine Korrektur der Fahrtrichtung der Ballenpresse bzw. eines Zugfahrzeugs der Ballenpresse in Abhängigkeit von dem ermittelten Wert anzupassen, zu verändern bzw. zu korrigieren. Es kann dadurch ein gleichmäßigerer Erntegutdurchsatz bzw. eine gleichmäßigere Erntegutzufuhr in den Zufuhrkanal und/oder in den Pressraum der Ballenpresse erreicht werden, wodurch durch die Ballenpresse gebildete Ballen bezogen auf ihre Breite gleichmäßiger bzw. homogener gebildet werden können. Bei einer derartigen Ballenpresse handelt es sich insbesondere um eine landwirtschaftliche Ballenpresse, insbesondere zur Erzeugung quaderförmiger Großballen, welche sowohl an ein Zugfahrzeug anhängbar als auch selbstfahrend ausgebildet sein kann.

Weist die Sensoreinrichtung wenigstens einen druckempfindlichen Sensor auf, so kann dieser eine punktuelle Belastung der Zufuhreinrichtung ermitteln. Vorzugsweise wird die Sensoreinrichtung aber wenigstens zwei voneinander beabstandete druckempfindliche Sensoren aufweisen, so dass der Gutdurchsatz bzw. die Gutverteilung mit Bezug auf die Breite der Ballenpresse durch die Differenz der Werte dargestellt wird. Ein drehmoment- bzw. torsionsempfindlicher Sensor kann ein auf die Zufuhreinrichtung bzw. einen ihrer Bauteile/ihrer Baugruppen wirkendes Moment bzw. eine Torsion der Zufuhreinrichtung bzw. eines ihrer Bauteile/ihrer Baugruppen ermitteln. Abhängig von der Richtung des Moments kann dieses Moment/diese Torsion bzw. der durch den Sensor ermittelte Wert einen Indikator für die Gutverteilung bzw. den Gutdurchsatz in der Art darstellen, dass das Moment in die Richtung dreht, in der die Zufuhreinrichtung einer größeren Belastung ausgesetzt ist und in welcher somit eine größere Gutmenge die Zufuhreinrichtung durchsetzt und/oder sich ihrer Wirkung entgegensetzt.

Gemäß der Darstellung in dem folgenden Ausführungsbeispiel weist die Zufuhreinrichtung eine Aufnahmeeinrichtung, in der Art einer Pick-Up, eine Verdichtergabel und einen Ladegabelzusammenbau auf, wobei die Verdichtergabel und der Ladegabelzusammenbau hydraulisch angetrieben werden. Es ist aber ebenso möglich, dass die Zufuhreinrichtung nur eine oder einzelne der genannten Baugruppen oder auch alternative oder weitere Baugruppen, beispielsweise in der Art von Förderrotoren oder Schneideinrichtungen etc. aufweisen kann. Weiter ist es möglich, dass alle oder einzelne dieser Baugruppen mittels Kurbeltrieben oder auch in jeder anderen geeigneten Art und Weise angetrieben werden.

Der Sensor kann an der Aufnahmeeinrichtung, der Verdichtergabel und/oder dem Ladegabelzusammenbau oder an jedem anderen geeigneten Bauteil der Zufuhreinrichtung vorgesehen sein. Der Sensor nimmt vorzugsweise eine Torsionsbelastung eines oder mehrerer der genannten Bauteile/Baugruppen auf. Es ist aber auch möglich, mehrere beabstandete Drucksensoren vorzusehen und aus deren Wertdifferenz auf die Gutverteilung und/oder den unterschiedlichen Gutdurchsatz zu schließen.

Der Sensor kann die Torsion eines sich beispielsweise quer zur Ballenpresse bzw. deren Fahrtrichtung erstreckenden Förderrotors, beispielsweise der Pick-Up oder Aufnahmeeinrichtung ermitteln, insbesondere wenn deren Antrieb in passender Art und Weise erfolgt. Insbesondere ermittelt der Sensor aber ein um eine Längsachse des Ladegabelzusammenbaus auftretendes Drehmoment. Der Ladegabelzusammenbau kann beispielsweise einen Zinken oder ähnliche Fördermittel tragenden Querträger oder eine andere geeignete, insbesondere rechenartige Fördereinrichtung aufweisen, welche an einem im Wesentlichen länglichen Träger angebracht ist. Bei dem Träger kann es sich beispielsweise um ein Rohr bzw. ein Rohrprofil oder jedes andere geeignete Profil handeln. Der Sensor kann dann an diesem Träger bzw. Profil vorgesehen sein und dessen Torsion um die Längsachse ermitteln. Es ist aber auch denkbar, den Sensor beispielsweise an dem Querträger vorzusehen.

Der Sensor weist vorzugsweise wenigstens einen digitalen Aufnehmer, insbesondere in der Art eines Dehnungsmessstreifens auf, bzw. ist als ein solcher ausgebildet.

Der von der Sensoreinrichtung, dem Sensor bzw. insbesondere dem digitalen Aufnehmer ermittelte bzw. zur Verfügung gestellte Wert kann durch eine Steuer- bzw. Regeleinrichtung, um beispielsweise als Grundlage für Steuer- oder Regelvorgänge zu dienen, und/oder durch eine Datenverarbeitungsanlage aufgenommen werden, um beispielsweise gespeichert, verarbeitet und/oder weitergeleitetet zu werden.

Die Steuer- bzw. Regeleinrichtung kann in Abhängigkeit von dem Wert eine oder mehrere Funktionen der Ballenpresse und/oder eines mit der Ballenpresse verbundenen Zugfahrzeugs steuern, regeln bzw. beeinflussen. Hierbei kann es sich beispielsweise um die Funktion der Zufuhreinrichtung als solche, beispielsweise um deren Fördergeschwindigkeit bzw. eine Bewegung des Ladegabelzusammenbaus, der Verdichtergabel und/oder der Aufnahmeeinrichtung handeln. Es ist beispielsweise denkbar, die Zufuhreinrichtung oder insbesondere die Aufnahmeeinrichtung geteilt vorzusehen, so dass die Fördergeschwindigkeit einzelner Abschnitte in Abhängigkeit von dem ermittelten Wert bestimmt werden kann. Insbesondere wird aber die Fahrtrichtung der Ballenpresse bzw. des Zugfahrzeugs in Abhängigkeit von dem Wert gesteuert und/oder geregelt bzw. beeinflusst, um so eine ungleichmäßige Gutzufuhr auszugleichen und/oder einem Mähschwad etc. auch unter Zuhilfenahme eines insbesondere automatischen, beispielsweise auch satellitengestützten Positionsbestimmungssystems verbessert folgen zu können. An der Ballenpresse bzw. dem Zugfahrzeug können darüber hinaus insbesondere optische Mittel vorgesehen sein, die insbesondere einen visuellen Abgleich mit vor dem Zugfahrzeug/der Ballenpresse angeordnetem Erntgut bzw. aufzunehmendem Material ermöglichen. Es kann auch vorgesehen sein, dass eine Warneinrichtung aktiviert wird, wenn der Wert einen vorgegebenen Grenzwert erreicht oder übersteigt oder auch dass die Ballenpresse/das Zugfahrzeug und/oder die Zufuhreinrichtung und/oder einzelne Komponenten der Zufuhreinrichtung gestoppt oder verlangsamt werden.

Die Datenverarbeitungsanlage und/oder die Steuer- bzw. Regeleinrichtung kann darüber hinaus oder alternativ mit einer Anzeigeeinrichtung verbunden sein bzw. mit einer solchen zusammenwirken. Die Anzeige kann einer Bedienungsperson so Informationen über den Gutfluss bzw. die durch die Ballenpresse aufgenommene Gutmenge zur Verfügung stellen, so dass diese die Fahrtrichtung der Ballenpresse/des Zugfahrzeugs und/oder deren Fahrtgeschwindigkeit entsprechend anpassen bzw. regulieren kann. Hierzu können auch von anderen Sensoreinrichtungen ermittelte Werte oder anderweitig zur Verfügung stehende Informationen (beispielsweise eines Positionsbestimmungssystems) herangezogen werden. Hierzu ist die Anzeige vorzugsweise in einer Kabine oder einer Bedienerplattform oder zumindest in der Nähe oder angrenzend an einen Bedienersitz oder -stand angeordnet.

Eine derartige Anzeigeeinrichtung kann die von der Sensoreinrichtung, dem Sensor bzw. dem Aufnehmer ermittelten bzw. zur Verfügung gestellten Werte direkt oder in einer aufbereiteten, verarbeiteten oder auch graphischen Art und Weise anzeigen.

Es kann vorgesehen sein, dass der Wert einer Bedienungsperson mittels einer Anzeigeeinrichtung beispielsweise einem an der Ballenpresse oder einem Zugfahrzeug vorgesehenen Display angezeigt oder auch anderweitig aufgezeichnet wird, um eine Einstellung der Ballenpresse und/oder eine Auswertung im Anschluss an einen Arbeitszyklus o.ä. zu ermöglichen. Eine direkte Einflussnahme bzw. eine Steuerung der Ballenpresse in Abhängigkeit von dem Wert wird aber dadurch möglich, dass der Wert durch eine vorzugsweise elektrische oder elektronische Steuer- bzw. Regeleinrichtung, welche an der Ballenpresse oder auch einem mit der Ballenpresse verbundenen bzw. verbindbaren Zugfahrzeug vorgesehen ist, aufgenommen bzw. verarbeitet wird.

Im Zufuhrkanal können Mittel vorgesehen sein, welche in Abhängigkeit von sich in dem Zufuhrkanal befindlichem Erntegut schwenken. Derartige Mittel können Daten über den Füllstand des Zufuhrkanals liefern, welche dazu verwendet werden können, um beispielsweise die Funktion der Lade- oder Verdichtergabel zu steuern. Diese Mittel können aber auch hiervon unabhängig oder zusätzlich mit der Sensoreinrichtung bzw. dem Sensor/den Sensoren zusammenwirken und/oder einen Bestandteil derselben bzw. den Sensor/die Sensoren bilden. Besonders vorteilhaft ist es, wenn die Mittel in der Art einer vorzugsweise federbelasteten Klappe ausgebildet sind oder eine solche aufweisen, welche sich zumindest im Wesentlichen über die Breite des Zufuhrkanals erstreckt. Diese Klappe ist vorzugsweise federbelastet. Eine derartige Klappe kann zwei- oder mehrteilig ausgebildet sein, wobei die Klappe(n) mit einem Sensor zusammenwirken kann/können oder auch einen solchen bilden kann. Wird eine der Klappen weniger bzw. stärker verschwenkt als die andere Klappe oder wird das Mittel einerseits weniger oder mehr durch Erntegut belastet, so kann hieraus gefolgert werden, dass im Bereich dieser Klappe oder des Mittels weniger oder mehr Erntegut vorhanden ist. Werden die Mittel bzw. die Klappe gleichmäßig verschwenkt, so liegt eine gleichmäßige Erntegutverteilung vor. Auf diese Weise können die Mittel bzw. die Klappe, vorzugsweise mittels Sensoren, Informationen über die Erntegutverteilung bezogen auf die Breite des Zufuhrkanals und somit der Erntemaschine zur Verfügung stellen.

In der Zeichnung sind nachfolgend näher beschriebene Ausführungsbeispiele der Erfindung dargestellt. Es zeigt:
- Fig. 1: eine erfindungsgemäße Ballenpresse in Seitenansicht und schematischer Darstellung und
- Fig. 2: eine vergrößerte Ansicht eines Zufuhrkanals mit einem Ladegabelzusammenbau.

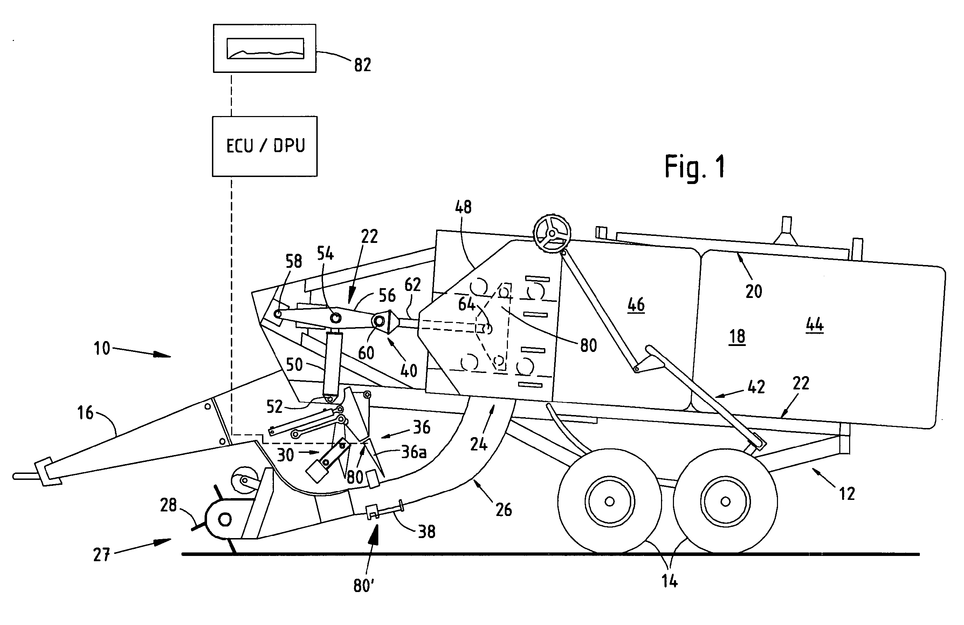

In Figur 1 ist eine Ballenpresse 10 in der Art einer Großballenpresse zum Herstellen quaderförmiger Ballen gezeigt, die einen Rahmen 12 aufweist, der auf Bodenstützrädern 14 in Tandemanordnung abgestützt ist. An den Rahmen 12 ist eine Deichsel 16 angeschlossen, welche sich von diesem aus nach vorn erstreckt und so ausgebildet ist, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Zufuhreinrichtung 27 weist eine Aufnahmevorrichtung 28, eine Verdichtergabel 30 und einen Ladegabelzusammenbau 36 auf. Die Aufnahmevorrichtung 28 in der Art einer Pick-Up und mit einer zur Mitte fördernden Schnecke ist vor dem Zufuhrkanal 26 angeordnet, um ein Schwad von Erntegut vom Boden aufzuheben und es an die Verdichtergabel 30 abzugeben, die dazu dient, Erntegut in dem Zufuhrkanal 26 zu verdichten, bis sich eine Ladung von vorgewählter Dichte in dem Zufuhrkanal 26 angesammelt hat und mittels eines Ladegabelzusammenbaus 36 über den Guteinlass 24 in den Pressraum 18 hineingestopft wird. An einer vorderen unteren Stelle des Zufuhrkanals 26 ist eine federbelastete Klappe bzw. ein Mittel 38 schwenkbar montiert, das in Abhängigkeit von sich in dem Zufuhrkanal 26 befindlichem Erntegut schwenkt, und anzeigt, dass eine gewünschte Pressgutdichte in dem Zufuhrkanal 26 erreicht ist, um die Bestromung eines elektrischen Steuerkreislaufs (nicht gezeigt) zu bewirken, der entsprechende Antriebsverbindungen herstellt, die den Ladegabelzusammenbau 36 derart aktiviert, dass er die Ladung des Ernteguts in den Pressraum 18 bewegen kann.

Wenn die Ladung des Ernteguts in den Pressraum 18 eingebracht wurde, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Pressraum 18 zu bewegen, wo es in einem Stapel verdichtet wird, wie dies im Stand der Technik gut bekannt ist. Nachdem der Stapel von verdichtetem Material eine vorgewählte Länge erreicht hat, wird ein Nadelzusammenbau 42 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Pressraum 18 gestopft werden.

Mit Bezug auf die Einzelheiten des Kolbenmechanismus 40 ist zu erkennen, dass letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 (sh. Figur 1) angeordnet ist. Diese Bewegung des Presskolbens 48 hat zum Ergebnis, dass Ladungen von Erntegut, die aus dem Zufuhrkanal 26 in den Pressraum 18 eingeführt werden, gegen einen Stapel von Erntegut verdichtet werden, was einen teilweise gebildeten Ballenteil 46 und/oder den kompletten Ballen 44 einschließt.

Der Kolbenmechanismus 40 weist einen als aus- und einfahrbare Betätigungsvorrichtung ausgebildeten Antrieb 50 auf, der hier als eine doppeltwirkende Hydraulikzylinder-Kolben-Einheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64 mit dem Presskolben 48 verbunden ist. Es wird hier darauf hingewiesen, dass die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, dass die Reaktionskraft des Ernteguts, das auf den Presskolben 48 wirkt, im Wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, dass die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, dass der Presskolben 48 den Gleiter eines Gleitkurbelmechanismus bildet, der einen ersten Lenker 56 als Kurbelarm und einen zweiten Lenker 62 als Pleuelstange enthält. Obwohl sich das von den Lenkern 56 und 62 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des Weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben, deren Offenbarung hierin einbezogen wird. Es wird darauf hingewiesen, dass anstelle des beschriebenen speziellen Antriebs mit einem Hydraulikmotor ein herkömmlicher Kurbeltrieb verwendet werden könnte.

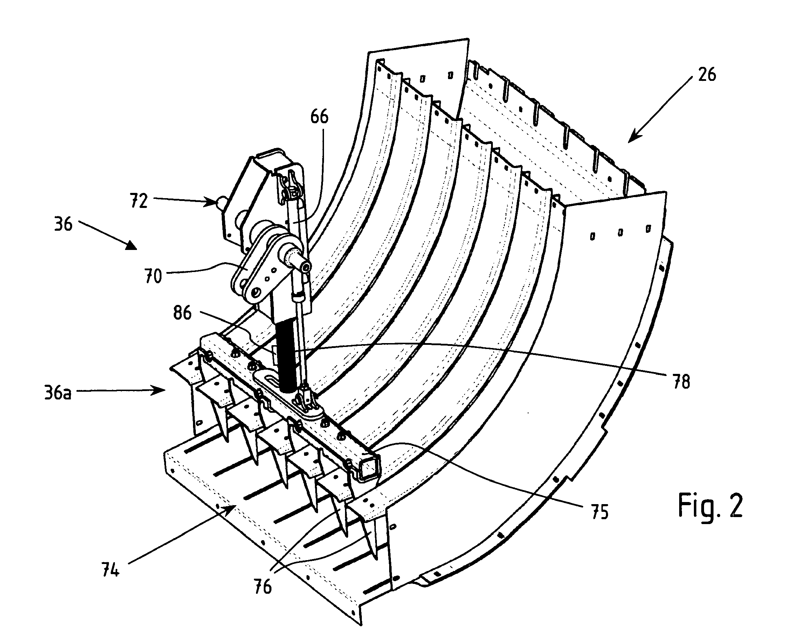

Es wird nun auf Figur 2 Bezug genommen in der der Zufuhrkanal 26 mit dem Ladegabelzusammenbau 36 vergrößert dargestellt ist. Der Ladegabelzusammenbau 36 weist eine Ladegabel 36a, einen ersten Hydraulikmotor bzw. einen ersten Motor 66 auf, welcher die Ladegabel 36a in Längsrichtung bewegen kann und einen zweiten Hydraulikmotor bzw. einen Motor (nicht gezeigt) auf, welcher mit dem Ladegabelzusammenbau 36 über einen Hebel 70 derart verbunden ist, dass der Ladegabelzusammenbau 36 durch ein Ein- bzw. Ausfahren des Motors 68 um eine Schwenkachse 72 verschwenkt.

Die Ladegabel weist eine in der Art eines Rechens ausgebildetes Förderelement 74 auf, welches wiederum einen Querträger 75 aufweist, der mit Zinken 76 versehen ist, die in den Zufuhrkanal 26 eingreifen können, um vorverdichtetes Erntegut aus dem Zufuhrkanal 26 in den Pressraum 18 einzubringen bzw. in diesen hinein zu stopfen.

Die Ladegabel 36a weist darüber hinaus eine Stange, ein Profil bzw. einen Träger 78 auf, an welchem das Förderelement 74 bzw. der Querträger 75 zumindest im Wesentlichen fest angebracht ist.

Im Betrieb wird der Ladegabelzusammenbau 36 dann aktiviert, wenn das in dem Zufuhrkanal 26 durch die Verdichtergabel 30 vorverdichtete Erntegut von dem Zufuhrkanal 26 in den Pressraum 18 verbracht bzw. in diesen hineingestopft werden soll. Diese Aktivierung kann beispielsweise in regelmäßigen, zeitlichen Abständen erfolgen und/oder von einer in dem Zufuhrkanal 18 durch geeignete Mittel 38 ermittelte Erntegutdichte und/oder in Abhängigkeit von anderen geeigneten Kenngrößen erfolgen.

Wird der Ladegabelzusammenbau 36 aktiviert, so bewegt der erste Motor 66 die Ladegabel 36a derart, dass die Zinken 76 in einer dem Guteinlass 24 abgelegenen Stelle in den Zufuhrkanal 26 eingreifen. Im Anschluss wird der nicht gezeigte zweite Motor, welcher an dem Hebel 70 angreift, den Ladegabelzusammenbau 36 bezogen auf Figur 2 derart nach oben verschwenken, dass die Zinken 76 das in dem Zufuhrkanal 26 befindliche Erntegut durch den Guteinlass 24 in den Pressraum 18 stopfen bzw. es in diesen einbringen.

Nachdem die Ladegabel 36a das Erntegut in den Pressraum 18 eingebracht hat, kann es vorgesehen sein, dass die Ladegabel 36a bzw. die Zinken 76 in dieser Stellung angrenzend an den Guteinlass 24 verbleiben, so dass sie diesen während des nächsten Vorverdichtungszyklusses verschließen und erst bei der nächsten Aktivierung aus dem Zufuhrkanal 26 herausgezogen und in die oben genannten, dem Guteinlass 24 abgelegene Stellung gebracht werden, um im Anschluss wieder in den Zufuhrkanal 26 eingebracht zu werden. Es ist aber auch möglich, dass der Guteinlass 24 während eines Verdichtungszyklusses durch nicht gezeigte, bekannte Mittel, beispielsweise in der Art einer verschwenkbaren Gabel verschlossen wird, und der Ladegabelzusammenbau 36 nach Abschluss des Ladevorgangs in seine dem Guteinlass 24 abgelegenen Stellung gebracht wird, wobei die Zinken 76 nicht in den Zufuhrkanal 26 eintreten.

Gemäß der vorliegenden Erfindung kann der Ladegabelzusammenbau 36 nun eine Sensoreinrichtung 80 aufweisen, welche dazu geeignet ist, auf den Ladegabelzusammenbau 36 bzw. die Ladegabel 36a wirkende Belastungen zu ermitteln. Die Sensoreinrichtung 80 ist wirksam mit einer elektronischen Datenverarbeitungsanlage DPU und/oder einer Steuer- bzw. Regeleinrichtung ECU verbunden, welche an der Ballenpresse 10 oder auch an einem mit der Ballenpresse 10 verbundenen bzw. verbindbaren Zugfahrzeug (nicht dargestellt) vorgesehen ist. Die Datenverarbeitungsanlage DPU und/oder die Steuer- bzw. Regeleinrichtung ECU weist darüber hinaus eine Anzeigeeinrichtung 82 auf bzw. ist mit einer solchen verbunden oder verbindbar.

Die Sensoreinrichtung 80 ist insbesondere dazu geeignet, eine Torsionsbelastung des Ladegabelzusammenbaus 36 bzw. der Ladegabel 36a um dessen/deren Längserstreckung und somit zumindest im Wesentlichen um den Träger 78 ermitteln. Hierzu ist die Sensoreinrichtung 80 einen Sensor 86 insbesondere in der Art eines Torsions- bzw. Drehmomentsensors auf bzw. ist als ein derartiger ausgebildet.

Aufgrund des ermittelten Moments können Rückschlüsse auf die Gutverteilung in dem Zufuhrkanal, insbesondere in Bezug auf dessen Breite gezogen werden. Ermittelt der Sensor 86 bzw. die Sensoreinrichtung 80 kein oder nur ein geringes Drehmoment bzw. keine oder nur eine geringe Torsionsbelastung, so ist das Erntegut gleichmäßig über die Breite des Zufuhrkanals 26 verteilt. Wird aber eine Torsionsbelastung bzw. ein Moment in eine Richtung (rechts oder links bezogen auf eine Fahrzeuglängsachse bzw. auf die -längserstreckung) ermittelt, so ist in dem jeweils stärker belasteten Bereich bzw. in dem Bereich, in dessen die Drehrichtung des Moments der Torsion gerichtet ist, eine größere Gutmenge vorhanden als in dem gegenüberliegenden Bereich bzw. auf der gegenüberliegenden Seite.

Die Sensoreinrichtung 80 liefert bzw. übermittelt einen entsprechenden Wert bzw. entsprechende Werte an die Datenverarbeitungsanlage DPU und/oder die Steuer- bzw. Regeleinrichtung ECU. Diese verarbeitet/verarbeiten den/die Wert(e) und steuern bzw. regeln beispielsweise eine oder mehrere Funktionen der Ballenpresse 10 und/oder des nicht gezeigten Zugfahrzeugs in Abhängigkeit von diesem/diesen Wert(en). Es ist beispielsweise denkbar, die Fahrtrichtung des Zugfahrzeugs bzw. der Ballenpresse 10 automatisch zu steuern bzw. derart zu kontrollieren, dass eine gleichmäßige Gutaufnahme erfolgt, beispielsweise indem das Zugfahrzeug/die Ballenpresse 10 einem Mähschwad genauer nachfolgt. Hierzu können beispielsweise an dem Zugfahrzeug oder auch insbesondere bei einer selbstfahrenden Ballenpresse an dieser selbst insbesondere optische Mittel vorgesehen sein, welche die Gutverteilung auf dem zu bearbeitenden Feldabschnitt aufnehmen und an die Datenverarbeitungsanlage DPU und/oder die Steuer- bzw. Regeleinrichtung zur Verarbeitung weiterleiten. Besonders einfach ist es aber, wenn die ermittelten Werte direkt oder in durch die Datenverarbeitungsanlage DPU aufbereiteter Form einer Bedienungsperson mittels der Anzeigeeinrichtung 82 angezeigt werden, so dass diese die Fahrtrichtung des Zugfahrzeugs bzw. der Ballenpresse 10 entsprechend anpassen bzw. korrigieren kann.

Die Sensoreinrichtung 80 kann auch dazu geeignet sein, einen auf den Ladegabelzusammenbau 36 bzw. die Ladegabel 36a wirkenden Druck bzw. ein senkrecht einwirkende Kraft zu ermitteln. Hierzu kann beispielsweise an dem Querträger 75 und/oder dem Träger 78 oder auch an anderen Teilen/Bereichen des Ladegabelzusammenbaus 36 wenigstens ein Sensor in der Art eines Dehnungsmessstreifens vorgesehen sein, der die Verformung des Querträgers 75 bzw. des Trägers 78 aufgrund der auf die Ladegabel 36a bzw. den Ladegabelzusammenbau 36 einwirkende zu dieser/diesem/diesen senkrechte Kraft ermittelt und einen Wert bzw. Werte liefert, die der jeweiligen Belastung entsprechen und welche an die Datenverarbeitungsanlage DPU und/oder die Steuer- bzw. Regeleinrichtung zur weiteren Verarbeitung, Verwendung und/oder Anzeige übermittelt werden. Eine derartige Sensoreinrichtung 80 kann beispielsweise ermitteln, welche Kraft die Ladegabel 36a bzw. der Ladegabelzusammenbau 36 durch das in dem Zufuhrkanal 26 angeordnete Erntegut erfährt, wenn dieses in den Pressraum 16 bewegt wird.

Aufgrund dieser Kraft können vorzugsweise mittels der Datenverarbeitungsanlage DPU Rückschlüsse, auf das Gewicht der jeweils in dem Zufuhrkanal angeordneten Erntegutportion und somit auf die Menge an Erntegut, welche mit dem jeweiligen Hub in den Pressraum gefördert wird, gezogen werden. Die Datenverarbeitungsanlage kann weiter das Gewicht des fertigen oder sich bildenden Ballens bestimmen und dieses beispielsweise unter Verwendung eines Positioniersystems, beispielsweise in der Art eine satellitengestützten GPS-Systems auswerten. Die Steuer- bzw. Regeleinrichtung kann darüber hinaus oder alternativ eine oder mehrere Funktionen der Ballenpresse 10 oder eines Zugfahrzeugs steuern und/oder regeln. Bei dieser Funktion kann es sich beispielsweise um die Fahrgeschwindigkeit des Zugfahrzeugs handeln. An der Ballenpresse kann beispielsweise die Funktion des Ladegabelzusammenbaus, beispielsweise die Häufigkeit, der zeitliche Abstand der Ladevorgänge, den Durchmesser bzw. das Volumen des Zufuhrkanals oder andere geeignete Funktionen handeln.

Gemäß einem weiteren Ausführungsbeispiel kann auch vorgesehen sein, dass eine Sensoreinrichtung 80' das Mittel 38, das in Abhängigkeit von sich in dem Zufuhrkanal 26 befindlichem Erntegut schwenkt, und anzeigt, dass eine gewünschte Pressgutdichte in dem Zufuhrkanal 26 erreicht ist, umfasst bzw. dass das Mittel 38 mit der Sensoreinrichtung 80' direkt oder indirekt zusammenwirken. Das gemäß dem vorliegenden Ausführungsbeispiel in der Art einer federbelasteten Klappe ausgebildete Mittel 38 ist dann bezogen auf seine Breite vorzugsweise mehrteilig ausgeführt. Hierzu sind wenigstens zwei Klappen vorgesehen, welche unabhängig voneinander verschwenkt werden können. Befindet sich nun auf einer Seite des Zufuhrkanals 26 eine größere Erntegutmenge, so wird die sich in diesem Bereich befindende Klappe bzw. das Mittel 38 in diesem Bereich stärker verschwenkt als in seinem übrigen bzw. seinem anderen Bereich. Die Mittel 38 bzw. die Klappe wirken wiederum mit einem Sensor zusammen, welcher Daten liefert, welche beispielsweise durch die Datenverarbeitungsanlage DPU verarbeitet werden können.

## Patentansprüche

1. Ballenpresse (10) mit einem quaderförmigen Pressraum (18), in dem ein Presskolben (48) beweglich aufgenommen wird, mit einem Zufuhrkanal (26) und mit einer Zufuhreinrichtung (27) zur Förderung und Verdichtung von Gut in dem Zufuhrkanal (26) und zum Einbringen des verdichteten Ernteguts in den Pressraum (18) und mit einer Sensoreinrichtung (80, 80') zur Ermittlung der Belastung wenigstens eines Bauteils der Ballenpresse (10), **dadurch gekennzeichnet, dass** die Sensoreinrichtung (80, 80') derart ausgebildet ist, dass sie wenigstens einen Werte ermittelt bzw. ermitteln kann, welche(r) den Erntegutsatz und/oder die Erntegutverteilung mit Bezug auf die Breite des Zufuhrkanals (26) repräsentiert.

2. Ballenpresse nach Anspruch 1, **dadurch gekennzeichnet, dass** die Sensoreinrichtung (80, 80') wenigstens einen vorzugsweise druck- und/oder drehmomentempfindlichen Sensor (86) aufweist.

3. Ballenpresse nach Anspruch 1 oder 2, **dadurch gekennzeichnet, dass** die Zufuhreinrichtung (27) wenigstens eine Aufnahmeeinrichtung (28), eine Verdichtergabel (30) und/oder einen Ladegabelzusammenbau (36) aufweist.

4. Ballenpresse nach Anspruch 3, **dadurch gekennzeichnet, dass** der Sensor (86) an der Aufnahmeeinrichtung (28), der Verdichtergabel (30) und/oder dem Ladegabelzusammenbau (36) vorgesehen ist und/oder eine insbesondere Druck- und/oder Torsionsbelastung der genannten Bauteile ermittelt.

5. Ballenpresse nach Anspruch 4, **dadurch gekennzeichnet, dass** der Sensor (86) ein um eine Längsachse des Ladegabelzusammenbaus (36) auftretendes Drehmoment ermittelt.

6. Ballenpresse nach einem oder mehreren der vorherigen Ansprüche, **dadurch gekennzeichnet, dass** die Sensoreinrichtung (80, 80') bzw. der Sensor (86) wenigstens einen digitalen Aufnehmer, insbesondere in der Art eines Dehnungsmessstreifens, aufweist bzw. als ein solcher ausgebildet ist.

7. Ballenpresse nach einem oder mehreren der vorherigen Ansprüche, **dadurch gekennzeichnet, dass** der Wert durch eine Datenverarbeitungsanlage (DPU) und/oder eine Steuer- bzw. Regeleinrichtung (ECU) aufgenommen bzw. verarbeitet wird.

8. Ballenpresse nach Anspruch 7, **dadurch gekennzeichnet, dass** die Steuer- bzw. Regeleinrichtung (ECU) wenigstens eine Funktion der Ballenpresse (10) und/oder eines mit der Ballenpresse (10) verbundenen Zugfahrzeugs, insbesondere die Zufuhreinrichtung (27) bzw. eine Bewegung des Ladegabelgabelzusammenbaus (36), der Verdichtergabel (30) und/oder der Aufnahmeeinrichtung (28) und/oder eine Fahrtrichtung der Ballenpresse (10) bzw. des Zugfahrzeugs in Abhängigkeit von dem Wert steuert und/oder regelt bzw. beeinflusst.

9. Ballenpresse nach Anspruch 7 oder 8, **dadurch gekennzeichnet, dass** die Datenverarbeitungsanlage (DPU) und/oder Steuer- bzw. Regeleinrichtung (ECU) mit einer Anzeigeeinrichtung (82) verbunden bzw. verbindbar ist bzw. mit einer solchen zusammenwirkt oder zusammenwirken kann, welche vorzugsweise an dem Zugfahrzeug im Bereich eines Bedienerplatzes vorgesehen ist.

10. Ballenpresse nach Anspruch 9, **dadurch gekennzeichnet, dass** die Anzeigeeinrichtung (82) den Wert direkt und/oder in aufbereiteter Form anzeigt.

11. Ballenpresse nach einem oder mehreren der vorherige Ansprüche, **dadurch gekennzeichnet, dass** in dem Zufuhrkanal Mittel (38), vorzugsweise in der Art einer wenigstens zweigeteilten Klappe, vorgesehen sind, die in Abhängigkeit von sich in dem Zufuhrkanal (26) befindlichem Erntegut schwenken und mit der Sensoreinrichtung (80, 80') bzw. dem Sensor/den Sensoren (86) zusammenwirken und/oder einen Bestandteil derselben bzw. den Sensor/die Sensoren (86) bilden.

## Claims

1. Baler (10) with a cuboidal baling chamber (18), in which a baling piston (48) is movably accommodated, with a supply channel (26) and a supply arrangement (27) for conveying and compressing crop in the supply channel (26) and for introducing the compressed harvested crop into the baling chamber (18), and with a sensor arrangement (80, 80') for determining the loading of at least one component of the baler (10), **characterized in that** the sensor arrangement (80, 80') is designed in such a manner that it determines or can determine at least one value which represents the batch of harvested crop and/or the distribution of the harvested crop with respect to the width of the supply channel (26).

2. Baler according to Claim 1, **characterized in that** the sensor arrangement (80, 80') has at least one preferably pressure- and/or torque-sensitive sensor (86).

3. Baler according to Claim 1 or 2, **characterized in that** the supply arrangement (27) has at least one take-up arrangement (28), a compression fork (30) and/or a loading fork assembly (36).

4. Baler according to Claim 3, **characterized in that** the sensor (86) is provided on the take-up arrangement (28), the compression fork (30) and/or the loading fork assembly (36), and/or determines an, in particular, pressure loading and/or torsional loading of the above-mentioned components.

5. Baler according to Claim 4, **characterized in that** the sensor (86) determines a torque which occurs about a longitudinal axis of the loading fork assembly (36).

6. Baler according to one or more of the preceding claims, **characterized in that** the sensor arrangement (80, 80') or the sensor (86) has at least one digital transmitter, in particular in the manner of a strain gauge, or is designed as such a device.

7. Baler according to one or more of the preceding claims, **characterized in that** the value is recorded and/or processed by a data processing system (DPU) and/or a control or regulating arrangement (ECU).

8. Baler according to Claim 7, **characterized in that** the control or regulating arrangement (ECU) controls and/or regulates or influences at least one function of the baler (10) and/or of a towing vehicle connected to the baler (10), in particular the supply arrangement (27) or a movement of the loading fork assembly (36), the compression fork (30) and/or the take-up arrangement (28), and/or a direction of travel of the baler (10) or of the towing vehicle, as a function of the value.

9. Baler according to Claim 7 or 8, **characterized in that** the data processing system (DPU) and/or control or regulating arrangement (ECU) is or can be connected to a display arrangement (82) or interacts or can interact with an arrangement of this type which is preferably provided on the towing vehicle in the region of an operator's stand.

10. Baler according to Claim 9, **characterized in that** the display arrangement (82) displays the value directly and/or in prepared form.

11. Baler according to one or more of the preceding claims, **characterized in that** means (38), preferably in the manner of a flap divided at least into two, are provided in the supply channel, said means pivoting as a function of harvested crop located in the supply channel (26) and interacting with the sensor arrangement (80, 80') or the sensor/the sensors (86) and/or forming part of the same or the sensor/the sensors (86).

## Revendications

1. Presse à balles (10) comportant une chambre de formage de balles (18) parallélépipédique, dans laquelle un piston de compactage (48) est logé de manière mobile, comportant un conduit d'admission (26) et un dispositif d'admission (27) pour le transport et le compactage des végétaux dans le conduit d'admission (26) et pour introduire les végétaux compactés dans la chambre de formage de balles (18), et comportant un dispositif de détection (80, 80') destiné à détecter la sollicitation exercée sur au moins un élément de la presse à balles (10), **caractérisée en ce que** le dispositif de détection (80, 80') est réalisé de telle sorte qu'il détermine ou peut déterminer au moins une valeur qui représente le débit et/ou la répartition des végétaux par rapport à la largeur du conduit d'admission (26).

2. Presse à balles selon la revendication 1, **caractérisée en ce que** le dispositif de détection (80, 80') comporte au moins un capteur (86), de préférence sensible à la pression et/ou au couple de rotation.

3. Presse à balles selon la revendication 1 ou 2, **caractérisée en ce que** le dispositif d'admission (27) comporte au moins un ramasseur (28), une fourche de compactage (30) et/ou un ensemble de fourche de chargement (36).

4. Presse à balles selon la revendication 3, **caractérisée en ce que** le capteur (86) est prévu sur le ramasseur (28), la fourche de compactage (30) et/ou l'ensemble de fourche de chargement (36) et/ou détecte une sollicitation, en particulier de pression et/ou de torsion, des éléments mentionnés.

5. Presse à balles selon la revendication 4, **caractérisée en ce que** le capteur (86) détermine un couple de rotation généré autour d'un axe longitudinal de l'ensemble de fourche de chargement (36).

6. Presse à balles selon une ou plusieurs des revendications précédentes, **caractérisée en ce que** le dispositif de détection (80, 80'), plus précisément le capteur (86) comporte au moins un enregistreur numérique, en particulier sous la forme d'une jauge de contrainte, ou est réalisé sous cette forme.

7. Presse à balles selon une ou plusieurs des revendications précédentes, **caractérisée en ce que** la valeur est enregistrée et/ou traitée par un dispositif de traitement des données (DPU) et/ou un dispositif de commande et de réglage (ECU).

8. Presse à balles selon la revendication 7, **caractérisée en ce que**, en fonction de la valeur, le dispositif de commande et de réglage (ECU) commande et/ou régule ou influence au moins une fonction de la presse à balles (10) et/ou d'un véhicule tracteur relié à la presse à balles (10), en particulier le dispositif d'admission (27), ou un mouvement de l'ensemble de fourche de chargement (36), de la fourche de compactage (30) et/ou du ramasseur (28) et/ou une direction de déplacement de la presse à balles (10) ou du véhicule tracteur.

9. Presse à balles selon la revendication 7 ou 8, **caractérisée en ce que** le dispositif de traitement des données (DPU) et/ou le dispositif de commande et de réglage (ECU) sont reliés ou peuvent être reliés à un dispositif d'affichage (82) ou coopèrent ou peuvent coopérer avec celui-ci, lequel est prévu de préférence sur le véhicule tracteur dans la zone du poste de conduite.

10. Presse à balles selon la revendication 9, **caractérisée en ce que** le dispositif d'affichage (82) affiche la valeur directement et/ou sous forme préparée.

11. Presse à balles selon une ou plusieurs des revendications précédentes, **caractérisée en ce que** dans le conduit d'admission sont prévus des moyens (38), de préférence sous la forme d'une trappe au moins en deux parties, qui pivotent en fonction des végétaux contenus dans le conduit d'admission (26) et coopèrent avec le dispositif de détection (80, 80'), plus précisément le capteur ou les capteurs (86), et/ou constituent une partie intégrante dudit dispositif de détection ou du capteur ou des capteurs (86).
